# EUROPÄISCHE PATENTSCHRIFT

(11) **EP 0 859 714 B1**
(45) Veröffentlichungstag und Bekanntmachung des Hinweises auf die Patenterteilung: **04.12.2002**
(21) Anmeldenummer: 97944709.1
(22) Anmeldetag: 15.09.1997
(51) Int. Cl.: B60T 17/22, B60T 13/66, F16D 65/16

(54) **VORRICHTUNG UND VERFAHREN ZUR STEUERUNG DES ANTRIEBSSTRANGS EINES KRAFTFAHRZEUGS**
METHOD AND DEVICE FOR CONTROLLING A MOTOR VEHICLE DRIVE TRAIN
PROCEDE ET DISPOSITIF DE COMMANDE DE LA TRANSMISSION D'UNE AUTOMOBILE

(30) Priorität: 19.09.1996 DE 19638350; 26.07.1997 DE 19732229
(43) Veröffentlichungstag der Anmeldung: 26.08.1998
(73) Patentinhaber: ROBERT BOSCH GMBH, 70442 Stuttgart (DE)
(72) Erfinder: BLATTERT, Dieter, D-74366 Kirchheim (DE)
(86) Internationale Anmeldenummer: DE9702064
(87) Internationale Veröffentlichungsnummer: WO98012090

(56) Entgegenhaltungen:
- EP-A- 0 357 922
- WO-A-90/02066
- WO-A-94/24453
- DE-A- 3 502 100
- DE-A- 19 548 560
- DE-C- 3 936 638
- ATZ Automobiltechnische Zeitschrift 96 (1994)

## Beschreibung

### Stand der Technik

Die Erfindung betrifft eine Vorrichtung und ein Verfahren zur Steuerung der Bremsanlage eines Fahrzeugs mit den Merkmalen der unabhängigen Ansprüche.

Aus dem Stand der Technik sind eine Vielzahl von unterschiedlichen Ausgestaltungen von Bremsanlagen bekannt. Einen Überblick über Bremsanlagen liefert beispielsweise das Bosch Kraftfahrtechnische Taschenbuch, 21. Auflage, Seiten 594 bis 643 (Bosch Automotive Handbook, 3rd edition, page 594 to 643). Solche Bremsanlagen können als hydraulisch, pneumatisch oder elektromechanisch arbeitende Bremsanlage ausgebildet sein. Die elektrische Betätigung solcher Bremsanlagen besteht beispielsweise in der Betätigung der Ventile, die hydraulisch oder pneumatisch den Bremsdruck in den Radbremsen beeinflussen. Im Falle einer elektromechanisch arbeitenden Bremsanlage werden die Radbremsen elektromotorisch betätigt. Für Bremsanlagen von Kraftfahrzeugen bestimmter Größe schreiben die gesetzlichen Bestimmungen vor, daß neben der Betriebsbremse, durch der Fahrzeugführer während des Normalbetriebs die Fahrzeuggeschwindigkeit verringern kann, weiterhin eine Hilfsbremsanlage und eine Feststellanlage vorgesehen sein. Die Hilfsbremsanlage ermöglicht es dem Fahrzeugführer, abstufbar die Fahrzeuggeschwindigkeit oder die Fahrzeuggeschwindigkeitsänderung bei einer Störung in der Betriebsbremsanlage zu verringern oder das Fahrzeug zum Stillstand zu bringen. Die Feststellbremsanlage stellt sicher, daß das Fahrzeug auf einer geneigten Fahrbahn und insbesondere in Abwesenheit des Fahrers mit mechanischen Mitteln im Stillstand gehalten werden kann.

Eine elektromechanisch arbeitende Bremsanlage ist beispielsweise aus der WO-A 94/24453 bekannt. Dort wird eine Radbremse beschrieben, bei welcher die Zuspannkraft durch einen Elektromotor erzeugt wird. Besonderes Augenmerk ist bei derartigen elektromotorisch betreibbaren Radbremsen wie auch im allgemeinen bei den anderen, elektrisch gesteuerten Radbremsen auf die zuverlässige Funktion der Bremsanlage zu richten. Dabei steht die Zuverlässigkeit der durch die Batterien bereitgestellten Spannungsversorgung im Vordergrund. Insbesondere muß die Betriebssicherheit des Bremssystems auch dann gewährleistet sein, wenn bei unzureichender gespeicherter elektrischer Energie keine ausreichende Bremswirkung mehr aufgebracht werden kann.

Aus der DE,A1,35 02 100 ist eine Druckmittelbremsanlage für Kraftfahrzeuge bekannt, bei der zur Energieversorgung der Bremsanlage zwei Energiespeicher vorgesehen sind, wobei abhängig vom Ladezustand des einen Energiespeichers auf den anderen Speicher umgeschaltet werden kann. Ein zu geringer Ladezustand kann optisch und/oder akustisch dem Fahrer des Fahrzeugs gemeldet werden.

Aus der DE,C1,39 36 638 ist eine elektrische Energieversorgung in einem Kraftfahrzeug bekannt, bei dem in Abhängigkeit vom Ladezustand der Fahrzeugbatterie die Verbraucher abgeschaltet werden, die für einen sicheren Betrieb des Fahrzeugs nicht unbedingt notwendig sind.

In der DE-Patentanmeldung 19548560.2 ist eine Bremsanlage mit elektrisch betätigbaren Radbremsen bekannt, die eine vom Fahrer betätigbare Feststellbremse umfaßt. Da der Ladezustand der Batterie beziehungsweise der Batterien schlecht meßbar sind, wird beim Start des Fahrzeugs ein Prüfablauf zum Prüfen der Funktionsfähigkeit der Bremsanlage eingeleitet, in dessen Verlauf wenigstens eine Radbremse mit einer Steuergröße beaufschlagt wird, die einer vorgegebenen Mindestbremswirkung entspricht. Die Feststellbremse wird dann nicht freigegeben, wenn an wenigstens einem Rad die vorgegebene Mindestbremswirkung nicht erreicht wird.

Die Aufgabe der vorliegenden Erfindung besteht darin, fahrsicherheitskritischen Situationen bei elektrisch steuerbaren Bremsanlagen vorzubeugen.

Dies wird durch die Merkmale der unabhängigen Ansprüche gelöst.

### Vorteile der Erfindung

Die Erfindung betrifft die Steuerung von Einheiten, die im Antriebsstrang eines Kraftfahrzeugs angeordnet sind. Weiterhin weist das Fahrzeug elektrisch betätigbare, ein- oder zweimotorig ausgelegte, Radbremsen auf. Es sind Steuermittel vorgesehen, die Funktionen wenigstens einer der Einheiten, die im Antriebsstrang angeordnet sind, und/oder die Funktion der Radbremsen steuern beziehungsweise regeln und die in Reaktion auf ein zugeführtes Signal die Funktion wenigstens einer dieser Einheiten beeinflussen. Wenigstens ein elektrisches Energiespeichermittel ist zur Energieversorgung mit den elektrisch betätigbaren Radbremsen betriebsverbunden. Der Kern der Erfindung besteht nun darin, daß Diagnosemittel vorgesehen sind, mittels der den Energieladezustand wenigstens eines der Energiespeichermittel erfaßt wird. Die Diagnosemittel erzeugen dann abhängig von dem erfaßten Energieladezustand wenigstens eines der Energiespeichermittel das Signal derart, daß die Funktion wenigstens einer der im Antriebsstrang angeordneten Einheiten an den erfaßten Energieladezustand wenigstens eines der Energiespeichermittel fahrsicherheitsorientiert angepaßt wird und/oder die einzelnen Betriebsfunktionen der Radbremsen, und zwar Betriebsbremsfunktion, Hilfsbremsfunktion und Feststellbremsfunktion, freigegeben werden.

Die Erfindung hat den Vorteil, daß bei einer unzureichenden Energiebereitstellung durch die Energiespeichermittel fahrsicherheitskritische Situationen durch einen Eingriff in den Antriebsstrang und/oder in die Radbremsen vermieden werden.

Insbesondere ist vorgesehen, daß die Diagnosemittel wenigstens zwei unterschiedliche Energieladezustände der Energiespeichermittel erfassen und das erzeugte Signals die unterschiedlichen Energieladezustände repräsentiert. Durch diese Ausgestaltung können die fahrsicherheitssteigernden Maßnahmen sehr genau an die zur Verfügung stehende Energie angepaßt werden.

Die Funktion einer der im Antriebsstrang angeordneten Einheiten oder die Funktion des gesamten Antriebsstrangs kann durch die Antriebsleistung und/oder durch das Antriebsmoment des Fahrzeugs, insbesondere durch die maximal mögliche Antriebsleistung und/oder durch das maximal mögliche Antriebsmoment des Fahrzeugs, repräsentiert werden. Damit wird die momentane oder die maximal mögliche Antriebsleistung beziehungsweise das momentane oder das maximal mögliche Antriebsmoment des Fahrzeugs an die zur Bremsung zur Verfügung stehende Energie angepaßt.

In dem Antriebsstrang des Fahrzeugs können wenigstens ein Fahrzeugmotor, insbesondere eine Brennkraftmaschine, eine Kupplung, ein Getriebe, ein Retarder und/oder eine Abgasklappe vorgesehen sein. Durch entsprechende Ansteuerung dieser Einheiten kann das Antriebsmoment beziehungsweise die Antriebsleistung an die zur Bremsung zur Verfügung stehende Energie angepaßt werden.

In einer vorteilhaften Ausgestaltung ist vorgesehen, daß das Potential wenigstens einer im Antriebsstrang angeordneten Einheit an das erfaßte Potential wenigstens eines der Energiespeichermittel derart angepaßt wird, daß zur Unterstützung der Bremswirkung des Fahrzeugs wenigstens eine der im Antriebsstrang angeordneten Einheiten derart beeinflußt wird, daß hierdurch eine Bremswirkung auf das Fahrzeug erzielt wird. Bei dieser Ausgestaltung kann also der Verzögerungswunsch des Fahrers mittels des erfindungsgemäßen Signals unterstützt werden, indem das Antriebsmoment beziehungsweise die Antriebsleistung entsprechend dem Potential der Energiespeichermittel bis hin zu negativen Werten reduziert wird. Solche negativen Antriebswerte wirken dann als Schleppmomente an den angetriebenen Fahrzeugrädern. Ist die Energie, die zur Bremsung zur Verfügung steht, nur gering, so gelangt man auf diese Weise zu einem Radschleppmoment, das die Betriebsbremsfunktionen (Hilfs- und Restbremswirkung) unterstützt und so die Fahrsicherheit steigert. Insbesondere ist dabei eine Ansteuerung des Fahrzeugmotors vorgesehen, um so ein sogenanntes Motorschleppmoment zu induzieren.

Insbesondere kann vorgesehen sein, daß in Reaktion auf das Signal, also bei unzureichender Energiebereitstellung, die Funktion wenigstens einer der im Antriebsstrang angeordneten Einheiten, insbesondere des Fahrzeugmotors, derart beeinflußt wird, daß ein Starten des Fahrzeugs, insbesondere ein Starten des Fahrzeugmotors, unterbunden wird. Hierbei ist vorzugsweise vorgesehen, daß die Unterbindung des Starts des Fahrzeugmotors durch ein Sperren der entsprechenden Stellung eines Fahrschalters erzielt wird.

In einer besonders vorteilhaften Ausgestaltung ist vorgesehen, daß dann, wenn das Signal ein Potential wenigstens eines der Energiespeichermittel repräsentiert, das zum Starten des im Antriebsstrang angeordneten Fahrzeugmotors nicht ausreicht, ein Starten des Fahrzeugmotors unterbunden wird. Auch hierbei kann die Unterbindung des Starts des Fahrzeugmotors durch ein Sperren der entsprechenden Stellung eines Fahrschalters erzielt werden. Diese Ausgestaltung hat den Hintergrund, daß die Energiespeichermittel im allgemeinen sowohl zur Energieversorgung der elektrischen Bremsen als auch zum Start des Fahrzeugmotors benutzt werden. Die Hochstromfähigkeit, also das Vermögen der Energiespeichermittel zum Start des Fahrzeugmotors einen hohen Strom zur Verfügung zu stellen, sinkt im allgemeinen mit dem Potential, dem Ladezustand. Ist das Potential der Energiespeichermittel für einen Start des Fahrzeugmotors zu gering, so wird gemäß dieser Ausgestaltung ein Startversuch des Fahrzeugmotors unterbunden und somit ein unnötiger Energieverbrauch verhindert. In diesem Fall (geringer Ladezustand) kann die noch zur Verfügung stehende Energie zur Aufrechterhaltung anderer wichtiger Funktionen verwendet werden.

Erfindungsgemäß kann vorgesehen sein, daß die elektrisch betätigbaren Radbremsen unterschiedliche Betriebsfunktionen wie beispielsweise Betriebsbremsfunktion, Hilfsbremsfunktion oder Feststellbremsfunktion aufweisen. Abhängig von der zur Verfügung stehenden Energie, das heißt abhängig von dem erzeugten Signal, werden diese Betriebsfunktionen freigegeben. In dieser Ausgestaltung werden nur die mit der momentanen zur Verfügung stehenden Energie sicher betreibbaren Bremsfunktionen freigegeben. Auf diese Weise wird eine ausreichende Verfügbarkeit der Bremsfunktionen sichergestellt.

Besonders vorteilhaft ist es, wenn die erwähnten Steuermittel derart ausgestaltet sind, daß in Reaktion auf das Signal der Antriebsstrang derart beeinflußt wird, daß die Fahrzeuggeschwindigkeit in vorgegebener Weise eingestellt wird. Dies bedeutet, daß während einer Fahrt mit eingeschränkter Verfügbarkeit der Bremsanlage durch einen unzureichenden Energievorrat die Fahrsicherheit durch eine entsprechend sicherheitsorientierte Einstellung der Fahrzeuggeschwindigkeit gewährleistet ist. Bei dieser Ausgestaltung kann vorgesehen sein, daß die Einstellung der Fahrzeuggeschwindigkeit im Sinne einer Begrenzung zu höheren Fahrzeuggeschwindigkeiten hin geschieht. Weiterhin kann die Einstellung der Fahrzeuggeschwindigkeit derart geschehen, daß die Fahrzeughöchstgeschwindigkeit stufenweise reduziert wird. Hierbei kann die Einstellung abhängig von den durch das Signal repräsentierten Potential der Energiespeichermittel vorgenommen werden. Die Begrenzung und/oder die Reduktion kann abhängig von dem durch das Signal repräsentierte Potential gewählt werden.

Bei einer elektromotorisch betätigten Bremse kann vorgesehen sein, daß als Bremsfunktionen vorgebbare Fahrzeugverzögerungen (beispielsweise 5,8 m/s², 2,9 m/s², 1,5 m/s²) je nach Energiespeicherinhalt selbsttätig eingenommen werden können. Weiterhin wird der Fahrer des Fahrzeugs durch eine entprechende Anzeigevorrichtung darüber informiert, ob momentan eine solche Bremsfunktion wirksam ist. Insbesondere ist eine stufenweise Rückfallstrategie im Störfall der Bremse vorgesehen. Eine "letzte" Maßnahme im Rahmen einer solchen Rückfallstrategie wäre dann die automatische Verriegelung der Feststellbremsfunktion, wenn die Fahrzeuggeschwindigkeit im wesentlichen Null beträgt. Es findet also eine aktive Zuordnung der möglichen Fahrzeugverzögerungen an den Speicherinhalt der Energiespeicher statt.

Die Erfindung betrifft ferner ein Verfahren zur Steuerung von Einheiten, die im Antriebsstrang eines Kraftfahrzeugs angeordnet sind, mit elektrisch betätigbaren Radbremsen und wenigstens einem Energiespeichermittel, das zur Energieversorgung mit den elektrisch betätigbaren, vorzugsweise einoder zweimotorig ausgelegte, Radbremsen (160-163, 170-173) betriebsverbunden ist. Hierbei wird das Potential wenigstens einer im Antriebsstrang angeordneten Einheit in Reaktion auf ein zugeführtes Signal beeinflußt. Weiterhin wird das Potential wenigstens eines der Energiespeichermittel erfaßt. Abhängig von dem erfaßten Potential wenigstens eines der Energiespeichermittel wird das Signal derart erzeugt, daß das Potential wenigstens einer im Antriebsstrang angeordneten Einheit an das erfaßte Potential wenigstens eines der Energiespeichermittel fahrsicherheitsorientiert angepaßt wird.

Weitere Vorteile ergeben sich aus der nachfolgenden Beschreibung von Ausführungsbeispielen bzw. aus den abhängigen Patentansprüchen.

### Zeichnung

Die Figur zeigt ein Übersichtsblockschaltbild einer bevorzugten Ausgestaltung einer Bremsanlage mit einer elektromechanischen Zuspannung der Radbremsen.

### Beschreibung von Ausführungsbeispielen

Die Erfindung wird nachstehend anhand der in der Zeichnung dargestellten Ausführungsformen näher erläutert.

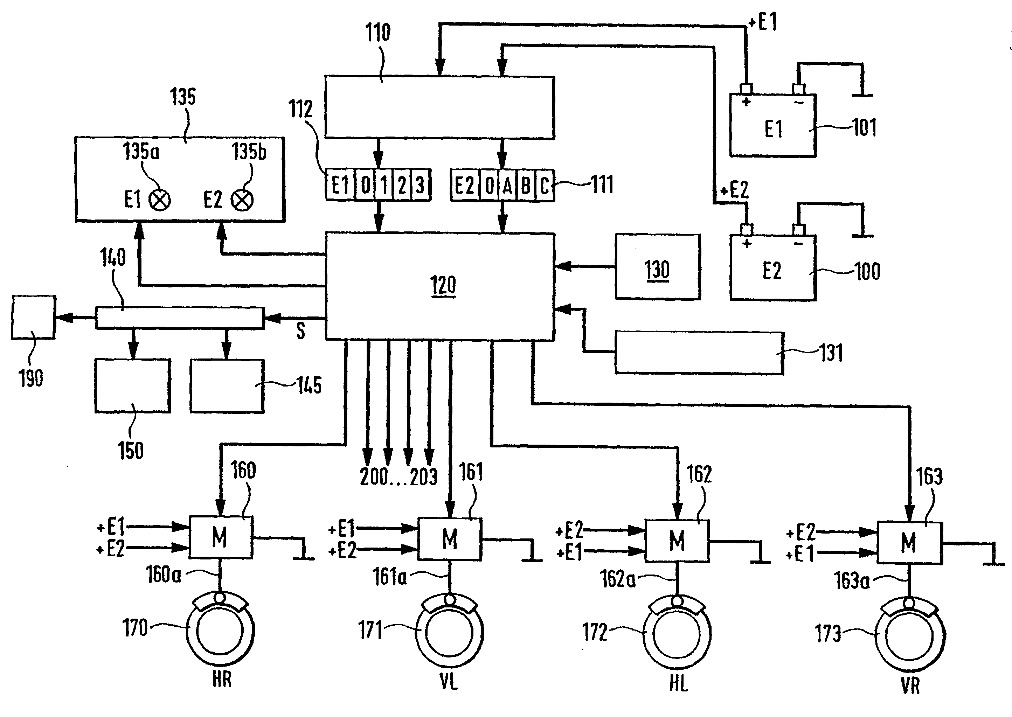

Figur 1 zeigt eine bevorzugte Ausgestaltung einer elektromotorisch betreibbaren Bremsanlage für Fahrzeuge, welche ein zweikreisiges elektrisches Bordnetz umfaßt. In Figur 1 sind vier Bremsen dargestellt, die den vier Rädern des Fahrzeugs zugeordnet sind. Dabei ist die Radbremse 170 beispielsweise dem rechten Hinterrad, die Radbremse 171 dem linken Vorderrad, die Radbremse 172 dem linken Hinterrad und die Radbremse 173 dem rechten Vorderrad zugeordnet. Die Radbremsen sind jeweils über mechanische Verbindungen 160a, 161a, 162a und 163a mit den elektromotorischen Stelleinrichtungen 160, 161, 162 und 163 verbunden. Die elektromotorischen Stelleinrichtungen werden von einem elektronischen Steuergerät 120 über die entsprechenden Ausgangsleitungen angesteuert. Aus Sicherheits- und Zuverlässigkeitsgründen ist das die Stelleinrichtungen mit Spannung versorgende elektrische Bordnetz redundant ausgeführt. Dabei können die den Radbremsen zugeordneten Stelleinrichtungen aus beiden Batterien (Energiespeichermittel) gespeist werden. In diesem Sinne sind die Stelleinrichtungen 160, 161, 162 und 163 über Versorgungsleitungen +E1 mit dem positiven Pol einer ersten Batterie 101 verbunden. Entsprechend sind die Stelleinrichtungen über Versorgungsleitungen +E2 mit dem positiven Pol einer zweiten Batterie 100 verknüpft. Dem elektronischen Steuergerät 120, welches wenigstens einen Mikrocomputer umfaßt, wird über eine Eingangsleitung von einem Pedalwertgeber 130 wenigstens eine Größe für den Betätigungsgrad des Bremspedals als Maß für den Fahrer-Bremswunsch zugeführt. Ferner werden dem elektronischen Steuergerät 120 Signale vom Block 131 zugeführt, der die Betriebsgrößen der Bremsanlage und/oder des Fahrzeugs erfaßt. Derartige Betriebsgrößen sind beispielsweise Radlasten, Größen für die eingestellten Istwerte der Bremswirkung an jeder Radbremse (z.B. Strom, Bremsmoment, Temperatur, Bremskraft, Schlupf, etc.), Raddrehzahlen, Fahrzeuggeschwindigkeit, Bremsbelagverschleiß, etc.. Ferner wird das elektronische Steuergerät 120 aus wenigstens einer der Batterien 101 und 100 mit Strom versorgt. Die entsprechende Verbindungsleitung ist in Figur 1 aus Übersichtlichkeitsgründen nicht dargestellt.

Die Batterien 100 und 101 sind mit den Einergiediagnosemitteln 110 verbunden, die die Statussignale 112 und 111 dem Steuergerät 120 zuführen.

Mit dem Bezugszeichen 140 sind Steuermittel gekennzeichnet, mittels der verschiedene Funktionen des (nicht dargestellten) Antriebsstrangs des Fahrzeugs beeinflußt werden können. Hierbei kann es um ein Steuergerät zur Steuerung beziehungsweise Regelung der Funktionen des Fahrzeugmotors und/oder einer Kupplung, eines Getriebes, eines Retarders und/oder einer Abgasklappe handeln. Bei diesen Steuermitteln kann es sich aber auch um eine Schnittstelle zu den die Funktionen steuernden beziehungsweise regelnden Einheiten 145 und 150 handeln. Weiterhin können die Steuermittel 140 energieverbrauchende Aggregate 190 des Fahrzeugs an- bzw. abschalten.

Vom Bremsen-Steuergerät 120 können darüber hinaus die Anzeigeeinheiten 135 mit den beiden Warnlampen 135a, 135b angesteuert werden.

Die dargestellte Bremsanlage weist eine nicht näher dargestellte mechanische oder mit elektrischer Energie betriebene Feststellbremse auf. Zur Ansteuerung der Feststellbremsen sind am Steuergerät 120 Anschlüsse vorgesehen, von denen Leitungen 200-203 vom Steuergerät 120 zu den Stelleinrichtungen 160, 161, 162 und 163 führen. Durch diese Leitungen 200-203 können die Feststellbremsen betätigt werden.

Die grundsätzliche Funktionsweise der Steuerung einer solchen Bremsanlage ergibt sich wie folgt. Das elektronische Steuergerät 120 bildet aus dem zugeführten Betätigungsgrad-Signal des Bremspedals (Block 130) nach Maßgabe zusätzlicher Betriebsgrößen wie Radlasten, Bremsbelagverschleiß, Reifengröße, Batteriespannung, etc. (Block 131) für jede Radbremse einen Sollwert, welcher ein Maß für die an der Radbremse einzustellende Bremswirkung repräsentiert (z.B. Bremsmoment, Bremskraft, Strom durch den elektrischen Motor, Verdrehwinkel des elektrischen Motors, Radschlupf, Raddrehzahl, etc.). Reglereinheiten, die nach Maßgabe einer vorgegebenen Regelstrategie (z.B. PID) ein Ausgangssignal im Sinne einer Annäherung der Istwerte an die Sollwerte erzeugen, führen die Regelung der Bremswirkung auf den vorgegebenen Sollwert durch. Die Istwerte können dabei entweder an den Radbremsen gemessen oder aus dort gemessenen Größen berechnet. Beispielsweise kann aus dem Strom durch den elektrischen Motor die Anpreßkraft der Bremsbeläge bzw. das Antriebsmoment des Motors abgeleitet werden, das ein direktes Maß für die ausgeübte Bremswirkung an der entsprechenden Radbremse ist. Ferner kann durch Dehnungsmeßstreifen oder andere geeignete Sensoren die ausgeübte Bremskraft beziehungsweise Bremsmoment gemessen und nach Maßgabe der Bremsenauslegung das ausgeübte Bremsmoment bestimmt werden. Der Verdrehwinkel kann durch entsprechende Winkelsensoren an den Radbremsen ermittelt werden.

Die Reglerausgangssignale für jede Radbremse werden in Ansteuersignale für die entsprechenden Stelleinrichtungen umgesetzt. Je nach Ausführung des die elektrische Stelleinrichtung enthaltenden Motors, ob Schrittmotor, Kommutatormotor oder Motor mit elektronischer Kommutierung, stellt die Ansteuersignalgröße eine auszugebende Schrittzahl, ein Tastverhältnis, einen Spannungswert, einen Stromwert, etc. dar. Im bevorzugten Ausführungsbeispiel werden in den Stelleinrichtungen Kommutatormotoren verwendet, die über eine Vollbrückenendstufe durch ein impulsförmiges Ansteuersignal mit veränderbarem Tastverhältnis in beiden Richtungen bestrombar sind. Das Tastverhältnis wird nach Maßgabe der Regelausgangssignale gebildet und verstellt den Motor gegen rückstellende Kräfte auf eine vorbestimmte Position.

Der Ladezustand der beiden Energiespeicher E1 101 und E2 100 wird durch die Energiediagnoseeinheit 110 in an sich bekannter Weise, beispielsweise durch eine Kombination aus einer Spannungsüberwachung mit einem überlagerten Strombelastungsverfahren, erfaßt und überwacht. Die Energiediagnoseeinheit 110 übermittelt dem elektronischen Steuergerät 120 der Bremse die Statussignale 111 und 112, welche den jeweiligen Ladezustand der Energiespeicher 100 und 101 repräsentieren. Das Statussignal 111 und 112 nimmt entsprechend dem Ladezustand der Energiespeicher im Bereich von 0-100% der maximalen Ladekapazität der Energiespeicher in diesem Ausführungsbeispiel jeweils vier Zustände (0,1,2,3 für E1 und 0,A,B,C für E2) ein, beispielsweise 0-10%, 10-40%, 40-60%, 60-100%). Das Bremsen-Steuergerät 120 verarbeitet und verknüpft diese Statusmeldungen 111 und 112 im Sinne einer Energiebilanz und gibt aufgrund der festgestellten möglichen Energiebereitstellung die für das Fahrzeug jeweils erreichbare Bremsfunktion (beispielsweise Betriebsbremse, Hilfsbremse oder Feststellbremse) frei.

Der Fahrer wird, initiiert durch das Steuergerät 120, durch die Fahreranzeigeeinheit 135 optisch und/oder akustisch über die Verfügbarkeit der Bremsfunktionen beziehungsweise über den Ladezustand der Batterien informiert.

Stellt das Steuergerät durch die Auswertung der Statussignale 111 und 112 fest, daß die Energieversorgung zur Sicherstellung von Bremsfunktionen nicht ausreichend ist, so wird ein entsprechendes Signal S den Steuermitteln beziehungsweise der Schnittstelle 140 zugeleitet. Durch das Signal S kann Einfluß auf Fahrzeugfunktionen, insbesondere auf den Antriebsstrang, genommen werden.

Bei Antritt der Fahrt und unzureichender Energiebereitstellung zur Sicherstellung von Bremsfunktionen wird beispielsweise eine Inbetriebnahme des Fahrzeugmotors unterbunden. Dies kann dadurch geschehen, daß eine entsprechende Stellung des Fahrschalters 145 gesperrt wird. Beispielsweise kann die Stufe "Motor starten" des vom Fahrer betätigbaren Fahrschalters (Zündanlaßschalter) gesperrt werden. Hierdurch wird sicherheitskritischen Fahrsituationen durch die Inbetriebnahme des Fahrzeugs durch den Fahrer trotz unzureichender Bremswirkung entgegengewirkt.

Die Energiespeichermittel werden im allgemeinen sowohl zur Energieversorgung der elektrischen Bremsen als auch zum Start des Fahrzeugmotors benutzt. Wie schon eingangs erwähnt sinkt die Hochstromfähigkeit, also das Vermögen der Energiespeichermittel zum Start des Fahrzeugmotors einen hohen Strom zur Verfügung zu stellen, im allgemeinen mit dem Ladezustand der Batterie. Ist der Ladezustand für einen Start des Fahrzeugmotors zu gering, so kann ein Startversuch des Fahrzeugmotors unterbunden und somit ein unnötiger Energieverbrauch verhindert werden. In diesem Fall (geringer Ladezustand) kann die noch zur Verfügung stehende Energie zur Aufrechterhaltung anderer wichtiger Funktionen verwendet werden.

Weiterhin oder alternativ kann während der Fahrt bei einer durch eine unzureichende Energiezufuhr eingeschränkten Bremsfunktion über die Mittel 140 durch den Block 150 das momentan und/oder das maximal zu Verfügung stehende Antriebsmoment des Fahrzeugs oder die momentan und/oder die maximal zu Verfügung stehende Antriebsleistung des Fahrzeugs begrenzt werden. Dies kann direkt durch einen entsprechende Eingriff in die Motorsteuerung geschehen. Alternativ oder ergänzend kann aber auch die Kupplungssteuerung und/oder die Getriebesteuerung des Fahrzeugs im Sinne einer solchen Begrenzung modifiziert werden.

Die Funktionen des Antriebsstrangs können auch durch eine stufenweise Freigabe des Antriebsmoments oder der Antriebsleistung des Fahrzeugmotors entsprechend dem Energieinhalt der Batterien beeinflußt werden.

In ähnlicher Weise kann ein Verzögerungswunsch (Bremsenbetätigung) des Fahrers durch das Signal S unterstützt werden, indem durch den Antriebsstrang ein negatives oder reduziertes Antriebsmoment erzeugt wird. Somit wird ein Schlepp- bzw. Bremsmoment an den angetriebenen Fahrzeugrädern induziert. Dies kann in bekannter Weise durch den Fahrzeugmotor und/oder durch das Getriebe (kleinerer Getriebegang) und/oder durch die Ansteuerung eines Retarders und/oder durch die Betätigung einer Klappe im Abgastrakt des Fahrzeugmotors (Auspuffklappe) erzielt werden.

Weiterhin kann während der Fahrt bei einer durch eine unzureichende Energiezufuhr eingeschränkten Bremsfunktion über die Mittel 140 durch den Block 150 die Fahrzeughöchstgeschwindigkeit begrenzt werden. Hierzu wird die Steuerung beziehungsweise Regelung des Fahrzeugmotors entsprechend modifiziert beziehungsweise beeinflußt. Die Höchstgeschwindigkeit des Fahrzeugs kann bei Vorliegen des Signals S stufenweise reduziert werden. Des weiteren kann auch vorgesehen sein, daß das Signal S quantitative Informationen über die im Steuergerät 120 ermittelte Energiebilanz der beiden Energiespeicher 100 und 101 enthält. So kann vorgesehen sein, daß die höchstzulässige Fahrzeuggeschwindigkeit bei einer geringeren zur Verfügung stehenden Energiemenge niedriger eingestellt wird als bei einer höheren zur Verfügung stehenden Energiemenge.

Weiterhin kann vorgesehen sein, daß bei unzureichender Energiemenge, beispielsweise durch Ausfall der Stromgeneratorfunktion, durch die Steuermittel beziehungsweise Schnittstelle 140 Energieverbraucher 190 abgeschaltet oder eingeschränkt betrieben werden, deren Funktion zur Fahrsicherheit weniger als die Bremse beiträgt. Hierdurch kann insbesondere bei einer unzureichenden Energiebilanz während der Fahrt des Fahrzeugs die Bremsfunktion zumindest weitgehend aufrechterhalten werden.

Wie schon eingangs erwähnt kann vorgesehen sein, daß in Steuergerät 120 als Bremsfunktionen vorgebbare Fahrzeugverzögerungen (beispielsweise 5,8 m/s², 2,9 m/s², 1,5 m/s²) je nach Energiespeicherinhalt selbsttätig eingenommen werden können. In der Figur 1 geschieht bei dieser Ausgestaltung die Aktivierung dieser Bremsfunktion steuergeräteintern durch das Signal S. Auch hier kann der Fahrer des Fahrzeugs durch die Anzeigevorrichtung 135 darüber informiert, ob momentan eine solche Bremsfunktion wirksam ist. Insbesondere ist eine stufenweise Rückfallstrategie im Störfall der Bremse vorgesehen. Eine "letzte" Maßnahme im Rahmen einer solchen Rückfallstrategie wäre dann die automatische Verriegelung der Feststellbremsfunktion, wenn die Fahrzeuggeschwindigkeit im wesentlichen Null beträgt. Es findet also eine aktive Zuordnung der möglichen Fahrzeugverzögerungen an den Speicherinhalt der Energiespeicher statt.

Zusammenfassend ist zu bemerken, daß durch die Erfindung die Verfügbarkeit der Bremsfunktionen für das jeweilige Fahrzeug durch das Steuergerät 120 erkannt wird. Das Steuergerät gibt die Bremsfunktionen nur bei ausreichender Energieversorgung frei, wobei der Fahrer des Fahrzeugs über die Verfügbarkeit akustisch und/oder optisch informiert wird.

Bei einer festgestellten unzureichenden Energiebereitstellung können über das Signal S beziehungsweise über die Mittel 140 Fahrzeugfunktionen modifiziert und/oder gesperrt werden, um einem fahrsicherheits- und verkehrsgefährdenden Fahrzeugbetrieb entgegenzuwirken.

## Patentansprüche

1. Vorrichtung zur Steuerung von Einheiten, die im Antriebsstrang eines Kraftfahrzeugs angeordnet sind, mit
- elektrisch betätigbaren, ein- oder zweimotorig ausgelegten Radbremsen (160-163, 170-173),
- Steuermitteln (140), die Funktionen (150, 145) wenigstens einer der Einheiten, die im Antriebsstrang angeordnet sind, steuern beziehungsweise regeln und die in Reaktion auf ein zugeführtes Signal (S) die Funktion wenigstens einer dieser Einheiten beeinflussen,
- wenigstens einem elektrischen Energiespeichermittel (100, 101), das zur Energieversorgung der elektrisch betätigbaren Radbremsen mit diesen betriebsverbunden ist,
- Diagnosemitteln (110, 111, 112, 120), mittels der der Energieladezustand wenigstens eines der Energiespeichermittel (100, 101) erfaßt wird und die abhängig von dem erfaßten Energieladezustand wenigstens eines der Energiespeichermittel das Signal (S) derart erzeugen, daß die Funktion wenigstens einer der im Antriebsstrang angeordneten Einheiten an den erfaßten Energieladezustand wenigstens eines der Energiespeichermittel fahrsicherheitsorientiert angepaßt wird.

2. Vorrichtung zur Steuerung der Radbremsen eines Kraftfahrzeugs mit
- elektrisch betätigbaren, ein- oder zweimotorig ausgelegten Radbremsen (160-163, 170-173), die unterschiedliche Betriebsfunktionen, und zwar Betriebsbremsfunktion, Hilfsbremsfunktion und Feststellbremsfunktion, aufweisen,
- Steuermitteln (120), die die Funktion der Radbremsen steuern beziehungsweise regeln und die in Reaktion auf ein Signal (S) die Funktion der Radbremsen beeinflussen,
- wenigstens einem elektrischen Energiespeichermittel (100, 101), das zur Energieversorgung der elektrisch betätigbaren Radbremsen mit diesen betriebsverbunden ist,
- Diagnosemitteln (110, 111, 112, 120), mittels der der Energieladezustand wenigstens eines der Energiespeichermittel (100, 101) erfaßt wird und die abhängig von dem erfaßten Energieladezustand wenigstens eines der Energiespeichermittel das Signal (S) derart erzeugen, daß abhängig von dem erzeugten Signal (S) die einzelnen Betriebsfunktionen Betriebsbremsfunktion, Hilfsbremsfunktion und Feststellbremsfunktion freigegeben werden.

3. Vorrichtung nach Anspruch 1, **dadurch gekennzeichnet, daß** die Diagnosemittel (110, 111, 112, 120) wenigstens zwei unterschiedliche Energieladezustände der Energiespeichermittel (100, 101) erfassen und das erzeugte Signals (S) die unterschiedlichen Energieladezustände repräsentiert.

4. Vorrichtung nach Anspruch 1, **dadurch gekennzeichnet, daß** als Funktion einer Einheit die Antriebsleistung und/oder durch das Antriebsmoment des Fahrzeugs gesteuert beziehungsweise geregelt wird, wobei insbesondere die maximal mögliche Antriebsleistung und/oder das maximal mögliche Antriebsmoment des Fahrzeugs gesteuert beziehungsweise geregelt wird.

5. Vorrichtung nach Anspruch 1, **dadurch gekennzeichnet, daß** in dem Antriebsstrang des Fahrzeugs wenigstens ein Fahrzeugmotor, insbesondere eine Brennkraftmaschine, eine Kupplung, ein Getriebe, ein Retarder und/oder eine Abgasklappe vorgesehen ist.

6. Vorrichtung nach Anspruch 1 oder 5, **dadurch gekennzeichnet, daß** die Funktion wenigstens einer im Antriebsstrang angeordneten Einheit an den erfaßten Energieladezustand wenigstens eines der Energiespeichermittel derart angepaßt wird, daß zur Unterstützung der Bremswirkung des Fahrzeugs wenigstens eine der im Antriebsstrang angeordneten Einheiten derart beeinflußt wird, daß hierdurch eine Bremswirkung auf das Fahrzeug erzielt wird.

7. Vorrichtung nach Anspruch 1, **dadurch gekennzeichnet, daß** die Steuermittel (140) derart ausgestaltet sind, daß abhängig von dem Signal (S) die Funktion (145) wenigstens einer der im Antriebsstrang angeordneten Einheiten, insbesondere des Fahrzeugmotors, derart beeinflußt wird, daß ein Starten des Fahrzeugs, insbesondere ein Starten des Fahrzeugmotors, unterbunden wird, wobei vorzugsweise vorgesehen ist, daß die Unterbindung des Starts des Fahrzeugmotors durch ein Sperren der entsprechenden Stellung eines Fahrschalters erzielt wird.

8. Vorrichtung nach Anspruch 1, **dadurch gekennzeichnet, daß** die Steuermittel (140) derart ausgestaltet sind, daß dann, wenn das Signal (S) einen Energieladezustand wenigstens eines der Energiespeichermittel repräsentiert, der zum Starten des im Antriebsstrang angeordneten Fahrzeugmotors nicht ausreicht, ein Starten des Fahrzeugmotors unterbunden wird, wobei insbesondere vorgesehen ist, daß die Unterbindung des Starts des Fahrzeugmotors durch ein Sperren der entsprechenden Stellung eines Fahrschalters erzielt wird.

9. Vorrichtung nach Anspruch 1, **dadurch gekennzeichnet, daß** die Steuermittel (120, 140) derart ausgestaltet sind, daß in Reaktion auf das Signal (S) die Funktion (150) wenigstens einer der im Antriebsstrang angeordneten Einheiten, insbesondere des Fahrzeugmotors, derart beeinflußt wird, daß die Fahrzeuggeschwindigkeit in vorgegebener Weise eingestellt wird.

10. Vorrichtung nach Anspruch 2, **dadurch gekennzeichnet, daß** die Steuermittel (120, 140) derart ausgestaltet sind, daß in Reaktion auf das Signal (S) die Funktion der Radbremsen derart beeinflußt wird, daß abhängig von dem Signal (S) vorgebbare Fahrzeugverzögerungen selbsttätig eingestellt werden.

11. Vorrichtung nach Anspruch 9, **dadurch gekennzeichnet, daß**
- die Einstellung der Fahrzeuggeschwindigkeit im Sinne einer Begrenzung zu höheren Fahrzeuggeschwindigkeiten hin geschieht oder
- die Einstellung der Fahrzeuggeschwindigkeit derart geschieht, daß die Fahrzeughöchstgeschwindigkeit stufenweise reduziert wird, wobei die Einstellung vorzugsweise abhängig von dem durch das Signal (S) repräsentierten Energieladezustand der Energiespeichermittel (100, 101) geschieht und insbesondere die Begrenzung und/oder die Reduktion abhängig von dem durch das Signal (S) repräsentierten Energieladezustand geschieht.

12. Verfahren zur Steuerung von Einheiten, die im Antriebsstrang eines Kraftfahrzeugs angeordnet sind, mit elektrisch betätigbaren Radbremsen (160-163, 170-173) und wenigstens einem Energiespeichermittel (100, 101), das zur Energieversorung mit den elektrisch betätigbaren, ein- oder zweimotorig ausgelegten Radbremsen (160-163, 170-173) betriebsverbunden ist, wobei
- die Funktion wenigstens einer im Antriebsstrang angeordneten Einheit in Reaktion auf ein zugeführtes Signal (S) beeinflußt wird,
- der Energieladezustand wenigstens eines der Energiespeichermittel (100, 101) erfaßt wird,
- abhängig von dem erfaßten Energieladezustand wenigstens eines der Energiespeichermittel das Signal (S) derart erzeugt wird, daß die Funktion wenigstens einer im Antriebsstrang angeordneten Einheit an den erfaßten Energieladezustand wenigstens eines der Energiespeichermittel fahrsicherheitsorientiert angepaßt wird.

## Claims

1. Device for controlling units which are arranged in the drive train of a motor vehicle, having
- electrically actuated wheel brakes (160-163, 170-173) which are configured with one motor or two motors,
- control means (140) which control in open-loop or closed-loop fashion functions (150, 145) of at least one of the units which are arranged in the drive train and which influence, in reaction to a supplied signal (S), the function of at least one of these units,
- at least one electrical energy storage means (100, 101) which is operatively connected to the electrically actuated wheel brakes in order to supply power to them,
- diagnostic means (110, 111, 112, 120) by means of which the energy charge state of at least one of the energy storage means (100, 101) is sensed and which generates, as a function of the sensed energy charge state of at least one of the energy storage means, the signal (S) in such a way that the function of at least one of the units arranged in the drive train is adapted to the sensed energy charge state of at least one of the energy storage means in a way which is oriented towards driving safety.

2. Device for controlling the wheel brakes of a motor vehicle having
- electrically actuated wheel brakes (160-163, 170-173) which are configured with one or two motors and which have different operating functions, specifically service brake function, auxiliary brake function and parking brake function,
- control means (120) which control in open-loop or closed-loop fashion the function of the wheel brakes and which influence the function of the wheel brakes in reaction to a signal (S),
- at least one electrical energy storage means (100, 101) which is operatively connected to the electrically actuated wheel brakes in order to supply power to them,
- diagnostic means (110, 111, 112, 120) by means of which the energy charge state of at least one of the energy storage means (100, 101) is sensed and which generates, as a function of the sensed energy charge state of at least one of the energy storage means, the signal (S) in such a way that the individual operating functions service brake function, auxiliary brake function and parking brake function are enabled as a function of the signal (S) which is generated.

3. Device according to Claim 1, **characterized in that** the diagnostic means (110, 111, 112, 120) sense at least two different energy charge states of the energy storage means (100, 101), and the signal (S) which is generated represents the different energy charge states.

4. Device according to Claim 1, **characterized in that** the driving power is controlled in open-loop or closed-loop fashion as a function of a unit and/or by the driving torque of the vehicle, in particular the maximum possible driving power and/or the maximum possible driving torque of the vehicle being controlled in an open-loop or closed-loop fashion.

5. Device according to Claim 1, **characterized in that** at least one vehicle engine, in particular an internal combustion engine, a clutch, a gearbox, a retarder and/or an exhaust gas valve are provided in the drive train of the vehicle.

6. Device according to Claim 1 or 5, **characterized in that** the function of at least one unit arranged in the drive train is adapted to the sensed energy charge state of at least one of the energy storage means in such a way that, in order to support the braking effect of the vehicle, at least one of the units arranged in the drive train is influenced in such a way that, as a result, a braking effect on the vehicle is brought about.

7. Device according to Claim 1, **characterized in that** the control means (140) are configured in such a way that the function (145) of at least one of the units arranged in the drive train, in particular of the vehicle engine, is influenced as a function of the signal (S) in such a way that starting of the vehicle, in particular starting of the vehicle engine, is prevented, it being preferably provided that the prevention of the starting of the vehicle engine is brought about by blocking the corresponding setting of a drive switch.

8. Device according to Claim 1, **characterized in that** the control means (140) are configured in such a way that if the signal (S) represents an energy charge state of at least one of the energy storage means which is not sufficient to start the vehicle engine arranged in the drive train, starting of the vehicle engine is prevented, it being in particular provided that the prevention of the starting of the vehicle engine is brought about by blocking the corresponding setting of a drive switch.

9. Device according to Claim 1, **characterized in that** the control means (120, 140) are configured in such a way that, in reaction to the signal (S) the function (150) of at least one of the units arranged in the drive train, in particular of the vehicle engine, is influenced in such a way that the vehicle speed is set in a predefined fashion.

10. Device according to Claim 2, **characterized in that** the control means (120, 140) are configured in such a way that, in reaction to the signal (S) the function of the wheel brakes is influenced in such a way that predefinable vehicle decelerations are set automatically as a function of the signal (S).

11. Device according to Claim 9, **characterized in that**
- the setting of the vehicle speed takes place in the sense of a limitation relating to relatively high vehicle speeds, or
- the setting of the vehicle speed takes place in such a way that the maximum speed of the vehicle is incrementally reduced, the setting preferably taking place as a function of the energy charge state of the energy storage means (100, 101) which is represented by the signal (S), and in particular the limitation and/or the reduction taking place as a function of the energy charge state which is represented by the signal (S).

12. Method for controlling units which are arranged in the drive train of a motor vehicle, having electrically actuated wheel brakes (160-163, 170-173) and at least one energy storage means (100, 101) which is operatively connected to the electrically actuated wheel brakes (160-163, 170-173) configured with one motor or two motors, in order to supply them with energy,
- the function of at least one unit arranged in the drive train being influenced in reaction to a supplied signal (S),
- the energy charge state of at least one of the energy storage means (100, 101) being sensed,
- at least one of the energy storage means generating the signal (S) as a function of the sensed energy charge state in such a way that the function of at least one unit arranged in the drive train is adapted to the sensed energy charge state of at least one of the energy storage means in a way which is oriented towards driving safety.

## Revendications

1. Dispositif pour commander des unités montées dans la ligne d'entraînement d'un véhicule automobile, comprenant :
- des freins de roues (160-163, 170-173) actionnés électriquement par l'intermédiaire d'un ou deux moteurs,
- des moyens de commande (140) qui commandent ou règlent les blocs fonctionnels (150, 145) d'au moins une des unités montées dans la ligne de transmission et qui, en réaction à un signal (S) qui leur est adressé, agissent sur le fonctionnement d'au moins une de ces unités,
- au moins un moyen (100, 101) d'accumulation d'énergie électrique, qui pour alimenter les freins de roues actionnés électriquement, est relié à ceux-ci en fonctionnement, et
- des moyens de diagnostic (110, 111, 112, 120) permettant de saisir l'état de charge en énergie d'au moins un des moyens d'accumulation d'énergie (100, 101) et qui en fonction de cet état saisi produisent un signal (S) de manière à adapter, dans le sens d'une sécurisation de la circulation du véhicule, le fonctionnement d'au moins une des unités appartenant à la ligne d'entraînement, à l'état d'énergie saisi.

2. Dispositif pour commander des freins de roue d'un véhicule automobile, comprenant :
- des freins de roues (160-163, 170-173) actionnés électriquement par l'intermédiaire d'un ou deux moteurs et qui présentent des fonctionnements de freinage différents, à savoir un fonctionnement en frein de service, un fonctionnement en frein auxiliaire et un fonctionnement en frein de stationnement,
- des moyens de commande (120) qui commandent et règlent le fonctionnement des freins de roue et qui, en réaction à un signal (S), agissent sur le fonctionnement des freins de roue,
- au moins un moyen d'accumulation d'énergie électrique (100, 101), qui pour alimenter les freins de roue est relié à ceux-ci, et
- des moyens de diagnostic (110, 111, 112, 120) permettant de saisir l'état de charge en énergie d'au moins un des accumulateurs d'énergie (100, 101) et qui en fonction de cet état saisi produisent le signal (S) de manière qu'en fonction de ce signal les différents fonctionnements, à savoir en frein de service, en frein auxiliaire et en frein de stationnement, soient mis en oeuvre.

3. Dispositif selon la revendication 1,
**caractérisé en ce que**
les moyens de diagnostic (110, 111, 112, 120) détectent au moins deux états de charge en énergie différents des moyens d'accumulation d'énergie (100, 101), le signal (S) produit représentant ces différents états.

4. Dispositif selon la revendication 1,
**caractérisé en ce que**
comme grandeur de fonctionnement d'une unité, on règle la puissance et/ou le couple d'entraînement du véhicule, et en particulier la valeur maximale possible de la puissance et/ou du couple.

5. Dispositif selon la revendication 1,
**caractérisé en ce qu'**
il est prévu dans la ligne d'entraînement du véhicule, au moins un moteur, en particulier un moteur à combustion interne, un embrayage, une transmission, un retardateur et/ou un clapet de gaz d'échappement.

6. Dispositif selon la revendication 1 ou 5,
**caractérisé en ce que**
le fonctionnement d'au moins une unité montée dans la ligne d'entraînement est adapté à l'état détecté de la charge en énergie d'au moins un des moyens d'accumulation d'énergie de sorte que, pour soutenir l'action de freinage du véhicule, on agit sur au moins une des unités montées dans la ligne d'entraînement de manière à obtenir aussi une action de freinage sur le véhicule.

7. Dispositif selon la revendication 1,
**caractérisé en ce que**
les moyens de commande (140) sont configurés de manière à agir en fonction du signal (S) sur le bloc fonctionnel (145) d'au moins une des unités de la ligne d'entraînement, en particulier le moteur du véhicule de manière à empêcher un démarrage du véhicule, en particulier un démarrage du moteur, et il est prévu de préférence que ce démarrage du moteur est empêché en bloquant la position de démarrage correspondante d'un contacteur de démarrage.

8. Dispositif selon la revendication 1,
**caractérisé en ce que**
les moyens de commande (140) sont configurés de manière que, si le signal (S) indique que l'état de la charge en énergie d'au moins un des moyens d'accumulation d'énergie n'est pas suffisant pour pouvoir démarrer le moteur monté dans la ligne d'entraînement, un tel démarrage du moteur est empêché, et en particulier il est prévu que cet empêchement du démarrage est obtenu en bloquant la position correspondante d'un contacteur de démarrage.

9. Dispositif selon la revendication 1,
**caractérisé en ce que**
les moyens de commande (120, 140) sont constitués de manière qu'en réaction au signal (S) le bloc fonctionnel (150) d'au moins une des unités de la ligne d'entraînement, en particulier le moteur du véhicule, est influencé de manière qu'il règle la vitesse de véhicule à une valeur prédéterminée.

10. Dispositif selon la revendication 2,
**caractérisé en ce que**
les moyens de commande (120, 140) sont constitués de manière qu'en réaction au signal (S) le fonctionnement des freins de roues est influencé de manière à produire automatiquement des décélérations du véhicule, qui peuvent être prédéterminées en fonction du signal (S).

11. Dispositif selon la revendication 9,
**caractérisé en ce que**
- le réglage de la vitesse du véhicule s'effectue dans le sens d'une limitation des vitesses maximales pouvant être atteintes, ou
- le réglage de la vitesse du véhicule s'effectue par réduction degré par degré de la vitesse maximale de véhicule, de préférence en fonction de l'état de la charge en énergie des moyens d'accumulation d'énergie (100, 101) représenté par le signal (S), et en particulier la limitation et/ou la réduction s'effectue en fonction de l'état de la charge en énergie représenté par le signal (S).

12. Procédé pour commander des unités montées dans la ligne d'entraînement d'un véhicule automobile, comprenant des freins de roue (160-163, 170-173) actionnables électriquement et au moins un moyen d'accumulation d'énergie (100, 101) qui est relié en service, pour les alimenter, aux freins de roue actionnables électriquement par l'intermédiaire d'un ou deux moteurs électriques, selon lequel
- le fonctionnement d'au moins une unité de la ligne d'entraînement est influencé en réaction à un signal (S) émis,
- l'état de la charge en énergie d'au moins un des moyens d'accumulation d'énergie (100, 101) est détecté,
- en fonction de cet état détecté, le signal (S) est émis de manière que le fonctionnement d'au moins une unité montée dans la ligne d'entraînement est adapté à l'état détecté de la charge en énergie d'un des moyens d'accumulation d'énergie, dans le sens d'une sécurisation de la circulation du véhicule.
